# EUROPEAN PATENT SPECIFICATION

(11) **EP 3 868 068 B1**
(45) Date of publication and mention of the grant of the patent: **30.08.2023**
(21) Application number: 18804601.5
(22) Date of filing: 16.11.2018
(51) Int. Cl.: H04L 9/40

(54) **DISTRIBUTING ANALYSIS MODELS**
VERTEILUNGSANALYSEMODELLE
DISTRIBUTION DE MODÈLES D'ANALYSE

(43) Date of publication of application: 25.08.2021
(73) Proprietor: Huawei Technologies Co., Ltd., Longgang District Shenzhen, Guangdong 518129 (CN)
(72) Inventor: LOWE, Christopher Kevan, 80992 Munich (DE); LUO, Zhong, 80992 Munich (DE); WU, Gengshi, 80992 Munich (DE)
(74) Representative: Gill Jennings & Every LLP
(86) International application number: PCT/EP2018/081615
(87) International publication number: WO 2020/098955

(56) References cited:
- US-A1- 2001 051 996
- US-A1- 2006 174 018
- US-B2- 7 770 017

## Description

### BACKGROUND OF THE INVENTION

This invention relates to detecting the authenticity of models, for example artificial intelligence models which may be used by a target device which is configured to monitor an aspect of the environment. The invention also relates to adapting the data defining such models to permit them to be authenticated or tracked.

It is common to install sensing devices, which may include environmental sensors, in locations where monitoring is required. The sensing devices may collect data about their environment. For example, security cameras are used to monitor spaces for unwanted activity, audio sensors and pressure pads are used to monitor sleeping babies, network intrusion detection sensors are used to monitor traffic within a network, and temperature sensors are used to monitor the performance of industrial equipment. Typically the primary function of these devices is to collect data. In addition, they may transmit collected data to a remote location for viewing or other analysis.

A sensing device could incorporate local processing capabilities. It may have a memory capable of storing code and a processor capable of implementing that code. It may then be feasible to load local analysis models on to such a device. The local analysis models may permit such a device to analyse data it has collected, for example to identify specific events or longer term trends in that data.

Such models may be transmitted from a data store over a network to the target device. Typically, the model may be transmitted over a wired or wireless network connection to the target device. In particular, one convenient approach is for the target device to be equipped with a wireless transceiver by means of which it can receive models and also transmit any data collected by the sensors of the device for storage and/or analysis. This can provide flexibility over where the device is sited.

Such mechanisms for distributing machine learning models may be subject to piracy or tampering. Piracy may result in misattribution of the development work done, or loss of revenue. Tampering may introduce alternative or flawed models that may misbehave, cause data loss or provide less-beneficial results.

It is desirable to develop a mechanism for ensuring the integrity of such models by permitting detection of their authenticity and/or allowing for traceability of the origin of pirated models.

US 2006/0174018 A1 provides a method for securely provisioning a device for operation within a service provider infrastructure over an open network.

### SUMMARY OF THE INVENTION

The invention is disclosed by the independent claims. Further embodiments are described by the dependent claims.

According to one aspect there is provided a service provision entity for storing analysis models according to appended claim 1.

In the present disclosure, a low significance component may be a component having a low significance level and can also be indicated as less significant component. Low significance components may also be indicated as non-sensitive components. A low significance component may be one or more bits, digits or characters of a parameter specified in a model. Those bits, digits or characters may be ones that represent elements of that parameter that are not the most significant bits, digits or characters of that parameter. They may be the less significant bits, digits or characters of the parameter. For example, they may comprise the n least significant bits, digits or characters of the parameter, where n is, for example, a number in the range from 1 to 6, or is less than 10% or 20% of the total number of significant bits, digits or characters in the parameter. A low significance component may be a component of a parameter of a model which component is such that its alteration does not substantially affect the operation of the model. The threshold level of significance below which a component is considered to be of low significance can be predefined or can be determined by the service provision entity based on the received data defining the analysis model. For example, the service provision entity may select a threshold that is high enough that sufficient components fall below that threshold that an entire data element such as a watermark, certificate or other datagram may be help by those components.

The watermark may be a label or a value used as replacement for or added to the low significance components or used as an indicator of which of the low significance components are to be exchanged with each other or set to one or more predetermined values. The watermark may be a set of data, of a predetermined content or form, which can be embedded in a set of data (such as the data defining a model) such that it is subsequently detectable in that set of data. The watermark may be a label or a value which can be incorporated into or added to the data and which cannot be easily removed. The watermark may also identify with a high degree of certainty the entities from which the watermarked data originated or passed through.

The service provision entity may be configured to communicate the analysis model to the target device by the steps of forming a target-specific version of the analysis model by encrypting it with a public key of the target device; and transmitting the target-specific version of the analysis model to the target device. This may inhibit the model from being run on other devices.

The target device may be remote from the service provision entity and communicatively coupled to the service provision entity via a network. In other words, the service provision entity may be communicatively coupled to the target device via a network, wherein the target device is a remote target device. This can allow the target device to be mobile.

The service provision entity may further comprise a communications terminal and the service provision entity may be further configured to: present to the communications terminal a list of the stored models; receive from the communications terminal an indication of a selected one of the stored models; and
in response to receiving that indication, transmit the selected model to the target device for implementation by the device. This can allow a model chosen by a user to be implemented on a specific device.

The certificate information added to the model may be formed in dependence on one or more of: an identity of the target device, a certificate associated with the target device, an identity of a provider of the analysis model, a certificate associated with the vendor of the analysis model, an identity of an intermediary distributor of the analysis model, and a certificate associated with an intermediary distributor of the analysis model. These provide for respective security measures. They may help an operator to know that the model is not authentic or is not from a trusted source.

The data analysis models may be artificial intelligence models whose implementation comprises applying a set of weights to input data. This can allow the models to be implemented in efficient ways, for example by machine learning.

The method comprises: receiving data defining a data analysis model; identifying low significance components of parameters specified in the model; determining a subset of those low significance components less significant; and applying the watermark to the determined subset of low significance components. This can be an efficient way to apply the watermark.

The step of applying the watermark may comprise: identifying in the data defining the model (i) values and (ii) indices pointing to those values; selecting a subset of those values in dependence on the identity of a provider associated with the model; exchanging a plurality of pairs of the values of the subset; and updating the indices pointing to the values of the subset so as to maintain the functionality of the analysis model This can be an efficient way to apply the watermark.

The method may comprise generating supplemental data containing encoded identification data; adding the supplemental data to a pre-trained analysis model; and retraining the model on a sample dataset by a process in which the data from the pre-trained model is allowed to vary but the supplemental data is not allowed to vary. This can enhance the functioning of the model when its coefficients have been modified.

The subset may be chosen according to a Bloom filter method in dependence on one or more of: an identity of a target device to which the analysis model is to be provided; a certificate associated with the target device; an identity of a vendor of the analysis model; a certificate associated with the vendor of the analysis model; an identity of an intermediary distributor of the analysis model; and a certificate associated with an intermediary distributor of the analysis model. These can provide for respective forms of identification via the watermark.

The analysis model may be an artificial intelligence model whose implementation comprises applying a set of weights to input data and the said parameters define the weights. This can be an efficient way to implement an Al model.

The model may be an artificial intelligence model. This may be a convenient processing methodology for the analysis of the sensed data, which can be readily configured at a server of a specific sensing requirement.

The sensor may be a camera and the sensed data may comprise video data. The model may be a video processing model. The environmental sensor may be a microphone and the sensed data may comprise audio data. The model may be an audio processing model. These may be useful technologies for sensing data about environments where physical intrusion is possible.

The selected model may be executable by the environmental sensor device. The environmental sensor device may be remote from the service provision entity and communicatively coupled to the service provision entity via a publicly accessible network. This allows the service provision entity to remotely configure the device and have the model run at the device. This may permit the model to run locally at the sensing device.

### BRIEF DESCRIPTION OF THE FIGURES

The present invention will now be described by way of example with reference to the accompanying drawings. In the drawings:
Figure 1 shows one example of an architecture involving a target device.
Figure 2 illustrates a method for applying a watermark to an analysis model.
Figure 3 illustrates a method for authenticating an analysis model.
Figure 4 shows a communication flow involving a target device.

### DETAILED DESCRIPTION OF THE INVENTION

In the systems to be described herein, a target device is connected to a communications network. The target device has on-board processing capability and comprises an environmental sensor, such as a camera. An operator of the device can select an algorithm for processing sensed environmental data, such as video data. For example, if the target device comprises a surveillance camera, the user may desire to detect the appearance of a cat or of a predetermined person in the images sensed by the camera and may select an appropriate algorithm for this purpose. The system allows the operator to cause the selected algorithm to be transmitted over the network to the target device. The target device then implements the algorithm to analyse data that is being sensed at the target device. The target device may be configured to take a predetermined action when data is matched by the algorithm. For example, the target device could transmit an alert to the operator or could upload the data that has been sensed, or a segment of it, to a remote location. In this way, the user can be alerted to environmental conditions that are of interest.

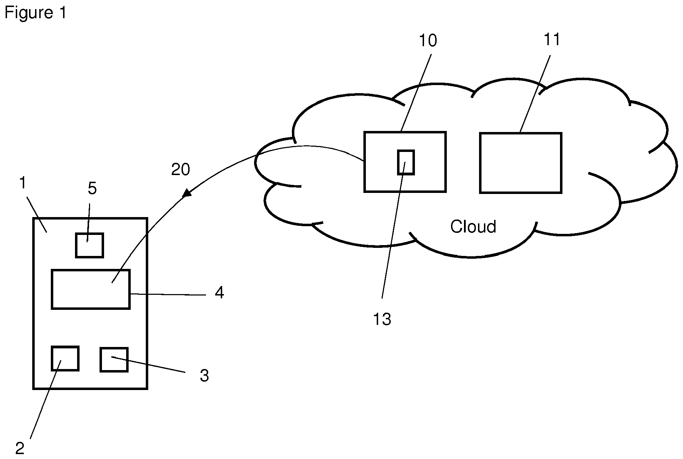

Figure 1 shows an example of an architecture including a target device 1. The target device comprises an environmental sensor 2. Non-limiting examples of suitable environmental sensors will be given below. The environmental sensor device also comprises a memory 3, a processor 4 and a transceiver 5. The memory stores in non-transient form code that can be run by the processor 4. That code may include an algorithm provided to the target device. The algorithm may include code that is directly executable by the processor and/or parameters such as neural network weightings which are not directly executable instructions but serve to configure other executable code that is stored in the memory 3. The former code may be known as a model. The transceiver 5 may be capable of transmitting and receiving data over either or both of wired and wireless communication channels. For example, it may support Ethernet, IEEE 802.11B and/or a cellular protocol such as 4G or 5G.

One example of a target device is a networked security camera. Such a device typically includes some onboard processing capability. This could provide the processor 4. The processor that is to be used for determining the authenticity of models in the manner described herein could also be used for the essential functions of the device. Alternatively, the device could have a separate control unit for its essential functions. In a further alternative, a model may be configured for implementation by a target device of a certain type, but the authenticity of that model could be determined by a device of a different type. This is relevant if a user (e.g. an administrator) of a system for distributing models wishes to verify the authenticity of a model using a conventional computer.

The transceiver 5 is capable of communicating over a network with other entities, such as computing entity 10. Computing entity 10 may be physically remote from the target device 1. The computing entity or computing device may be or implement a service provision entity. For example, the service provision entity may be embodied by one or more specific purpose computers. Alternatively, the service provision entity may be software running on a general-purpose computing device. In some implementations, the service provision entity may be a dedicated chip optionally including a memory and I/O interfaces. The network may be a publicly accessible network such as the internet. The entity 10 may be based in the cloud. Where the computing entity 10 is implemented by a physical device, the entity comprises a processor and a memory. The memory stores in a non-transient way code that is executable by the processor to implement the function of the computing entity in the manner described herein.

The computing entity 10 comprises or has access to a data store 13 which stores a library of processing models. Each processing model implements an algorithm. The processing model is a set of data that can used to implement the respective algorithm. A single algorithm may correspond to multiple processing models. Each of those processing models may be suitable for implementation by a different type of target device. The manner in which the processing model implements its algorithm depends on the capabilities of the target device for which it was intended. For example, it may be written in a language that can be interpreted by the relevant target device, and it may be written so as to use no more resource (e.g. computing and memory resource) than is available on the relevant target device. Each processing model may comprise executable code that is executable by a processor on the relevant target device. Each processing model may comprise one or more parameters that can be interpreted by the relevant target device to characterise an executable process. Those parameters may refine that process to perform a desired function. For example, a relevant target device may have inbuilt code for performing a generic matching algorithm, for example a generic neural network analysis algorithm. The generic matching algorithm may be capable of being tailored by certain inputs, for example weights or defined connections between nodes, so that it matches a desired trait or object. A processing model may comprise those inputs. In summary, the model library stores a set of processing models that can be implemented by target devices of one or more types.

The model store 13 can receive data defining the processing models from one or more model developers. The models may have been signed with a private key of the model developer using a public/private key algorithm of known type. This may allow the model store or another entity that knows the developer's public key to authenticate the model as having originated with the model developer. This process will be discussed in more detail below.

The models might define a set of algorithms, parameters and functions. Those functionalities might have been generated through machine learning-based techniques. They might employ heuristic or neural network processing.

A command and control entity 11 manages the operation of the computing engine 10. This may involve any of a number of tasks, for example:
- Selecting, from the models stored in the library 13, a processing model that is suitable for use by a target device of a predetermined type to match a predetermined trait or object, or a processing model that has been specifically chosen by a user.
- Causing a selected model to be transmitted to a predetermined target device, e.g. by the computing entity 10, shown at 20 in Figure 1.

In operation, the system of figure 1 functions as follows.
- A user of the target device 1 signals the command and control entity 11 to indicate that he wishes target device 1 to perform local detection of a given trait. For example, if target device 1 is a camera device, the operator may want the device to locally detect the appearance of any cat in video data sensed by the target device. Alternatively, the user may specify the precise model he wishes to be used.
- The command and control entity 11 selects the processing model for target device 1 to implement to perform the desired function.
- The command and control entity causes that model to be transmitted to target device 1 (see data path 20).
- The processing model is received by target device 1, stored in memory 3 and can then be implemented by processor 4.

In this way, the model store can hold data defining models and distribute appropriate models to users' devices when requested.

A number of security issues may arise in a system of this nature. First, a model store or a user of a model may want to satisfy themselves that a certain model has actually been written by a certain developer. That developer might vouch for the fact that the model will perform as advertised. Second, a user of a model may want to satisfy themselves that they are receiving a model from a specific model store. This may provide confidence that the model has not been interfered with by an intermediary. Third, a developer and a model store may want to arrange that a model transmitted to one user is unlikely to be implementable by another user. This may help to avoid pirating of models. Fourth, a developer and an operator of a model store may want to be confident that their models cannot be distributed by other model stores, or that if they are so distributed, or if they are pirated in another manner, persons involved in the illicit distribution can be traced. Measures to assist with one or more of these forms of authentication will be discussed below.

At the model store 13, before the model is sent to the target device, one or both of a watermark and a certificate may be applied to the model. The certificate may be added by being appended to the model. The watermark may be a set of data, of a predetermined content or form, which can be embedded in a set of data (such as the data defining a model) such that it is subsequently detectable in that set of data. The watermark may be a label or a value which can be incorporated into or added to the data and which cannot be easily removed. The watermark may also identify with a high degree of certainty the entities from which the watermarked data originated or passed through. The way in which the watermark is applied is as follows.
- Less significant or non-sensitive components of the parameters specified in the model are identified. These non-sensitive components are components (e.g. data bits) that can be altered without materially affecting the performance of the model. For example, in a model for detecting cats, these are components whose alteration does not affect the ability of the model to detect cats. For example, these components may be less significant bits of numeric values, lower-order bits in the mantissas of floating point numbers, portions of comments, or padding. Specifically, it may be noted that in many AI models, numerous weightings are specified as numeric values. The model may perform adequately even if one or more of those values is altered slightly. The less significant bits (e.g. the one, two or three least significant bits) of one or more such values may constitute the non-sensitive components.
- A subset of the identified components are then determined. The subset may be determined in dependence on the source from which the model was received. For example, the subset may be based on a public key of the developer of the model and/or on a private key of the model store.
- A first watermark is then applied to the subset of components. The watermark may be of a predetermined form. For example it may be a static value or it may be algorithmically generated by means of a predetermined algorithm. The step of applying the watermark may comprise replacing the content of at least some of the less significant components of the subset with components of the watermark. For example, each bit of the less significant components could be replaced with a respective bit of the watermark. Alternatively or additionally, the step of applying the watermark may comprise replacing the content of each of at least some of the less significant components of the subset with the content of another of the less significant components of the subset. Alternatively, the step of applying the watermark may comprise adapting the subset of components in accordance with the watermark, for example by incrementing, decrementing or XOR-ing bits of the subset of components with respective bits of the watermark. The watermark may be applied to the subset of components by exchanging pairs of those components with each other. For example, within the representation of a typical model, for the input to a particular node, there are a series indications of which nodes' outputs are to be summed, along with a weighting for each of those nodes. This is a list of Node IDs and Weightings. It is feasible to change the order in which the tuples of Node ID and Weighting appear. This manipulation of the ordering within the lists of node IDs and weights can be used to store information, such as a watermark. Other structures within a model's representation may also be amenable to reordering, and therefore may be used to encode information such as a watermark.
- A the model may then be signed by the model store using a private key of the model store, using a known public/private key algorithm. This allows the resulting model to be authenticated to the model store by someone having access to the public key of the model store.

In an alternative process, in a first step the watermark may be applied to an operational model to form an altered model, and then the altered model may undergo processing to improve its performance. This may be particularly relevant if the model is a model whose performance is defined by parameters and/or if the model is a trained neural network model. In this alternative process, as a first step watermark content is generated, e.g. as static predetermined data or as content generated algorithmically by a predetermined algorithm. Then that watermark is added to the model. It may be added to the model by appending it to parameters of the model or by replacing portions of parameters of the model (e.g. the least significant portions of such parameters) with elements of the watermark. The parameters that are to be adapted in that way may be chosen as for the subset of components described above. Then the model may be retrained on a sample dataset to improve its performance. In that retraining step adaptations to the model may be constrained so that the portions of the parameters that contain the watermark are not changed, but the other portions of those parameters, and all portions of other parameters, may be changed. Despite that constraint, the performance of the model may be improved by retraining. Then the resulting retrained model can be submitted to the model store.

A device to which a model is to be transmitted may be associated with a unique identifier. That may, for example be the identity of an integrated circuit in the device. The identity will be referred to herein as a chip ID. A second watermark and certificate may be applied to the model when a user of a target device having a certain chip ID requests the model from the model store. Typically, the user or his device will provide the chip ID, and optionally a user ID associated with the user, to the model store. The chip ID indicates the identity of the target device to be used to implement the model. The chip ID and optionally the user ID may be provided at the point when a model is to be provided, or they may be provided in advance, for example when a user sets up an account with the model store.

This second watermark and certificate may be applied to a subset of less critical components of the model. The subset may be determined in dependence on the chip ID, or other identifier, of the target device that has requested the model and optionally on the user ID of the user requesting the model. The subset of components to which the second watermark is applied can be expected to be different to those to which the first watermark is applied.

When the selected model, having both watermarks and certificates applied to it, is received at the target device, the device can authenticate the model by examination of the certificates. It can do this by means of a public/private key algorithm, for example by any one or more of authenticating the model to a developer, store or other provider by checking, using a public key of that entity, that the model has been signed with the private key of that entity. The target device 1 may be configured to implement the model only if it is determined that the model has originated from an authentic source. In this way, the target device can be secured against malicious or counterfeit models. The model may be stored in the memory 3 of the device and implemented by means of the processor 4 to process data sensed by sensor 2 only if it is determined as being authentic.

The target device can reject the model if the determination of the model's authenticity is negative. The target device may send the model back to the data store, optionally with information that the model has been detected as unauthentic. That information may also be passed to the model developerto permit them to investigate.

In the course of investigation of piracy, an inspector may use a verifying device to verify the watermark of a model. This verification may be done by identifying less significant components of the model and analysing them to detect a watermark. Preferably the verifying device and the model store use a common or similar algorithm to detect less significant components, so that they are likely to reach the same conclusion as to which components are capable of holding a watermark. The verifying device then identifies a subset of the identified less significant components as holding a potential watermark. One convenient way of doing this is using a Bloom filtering algorithm. The subset of components may be defined based on an identifier known to the device, for example an identifier of the developer of the model or of the model store from which the model was derived. These may define a candidate set of components for holding a watermark. Once a candidate set of components has been identified as potentially holding a watermark, the verifying device analyses those components to determine whether the data they hold is indicative of a watermark that represents authorisation by a trusted entity, e.g. the developer and/or the model store.

It should be noted that applying the watermark in a way such that it can be detected by a Bloom filter technique can provide enhanced security, as it can make it harder for a malicious entity to remove a watermark from a model by obtaining two instances of that model, identifying the differences between them and then replacing the areas of difference with other data. Activity of that nature may still be detectable since some identifying components from the application of the second watermark described above are likely to remain after processing in that way. This may allow a pirated model to be detected. It may further be noted that the pattern of those remaining parts of the watermark may indicate which instances of the model were compared. That might help to identify individuals involved in the piracy of the model. It can further be noted that identifying differences in the manner described above between models obtained from a single model store will not allow the first watermark described above to be detected or removed. Even if a model is supplied to multiple model stores, remnants of the first watermark may be detectable by Bloom filtering techniques, analogously to the approach described above in respect of the second watermark.

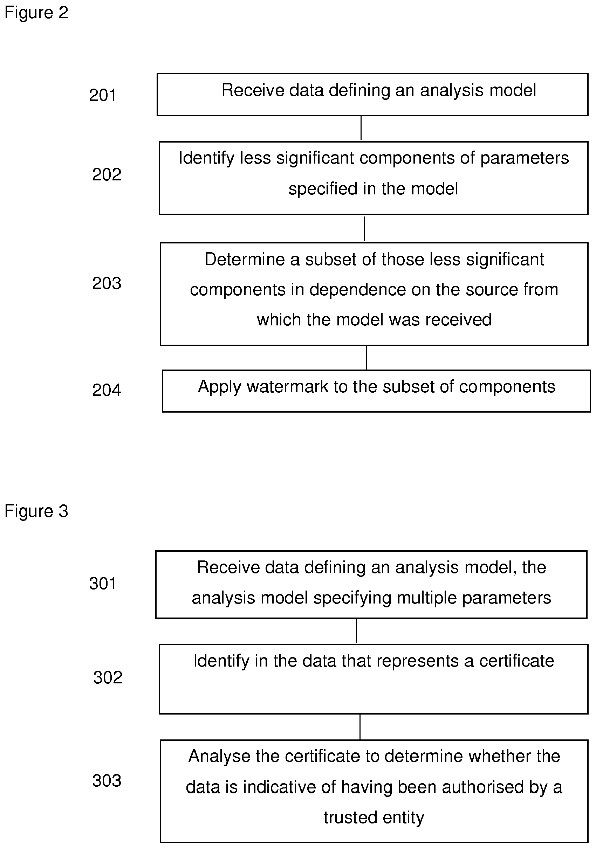

Figure 2 summarises a method for applying a watermark to an analysis model. In step 201, data is received defining the analysis model. Next, in step 202 less significant components of parameters specified in the model are identified. In step 203, the method comprises determining a subset of those less significant components in dependence on the source from which the model was received and in step 204, the method comprises applying the watermark to the subset of components.

Figure 3 summarises a method for authenticating an analysis model according to the present invention. In step 301, the method comprises receiving data defining an analysis model, the analysis model specifying multiple parameters. In step 302, data that represents a certificate are identified. The next step at 303 comprises analysing the certificate to determine whether the data is indicative of having been authorised by a trusted entity. This may be done by comparing the supposed watermark with an expected form, for example a predetermined static value or a value computed by a predetermined algorithm. If the identified components are found to match the expected form then the watermark can be considered to be authenticated. Otherwise, either another set of components may be tried, or the model may be rejected.

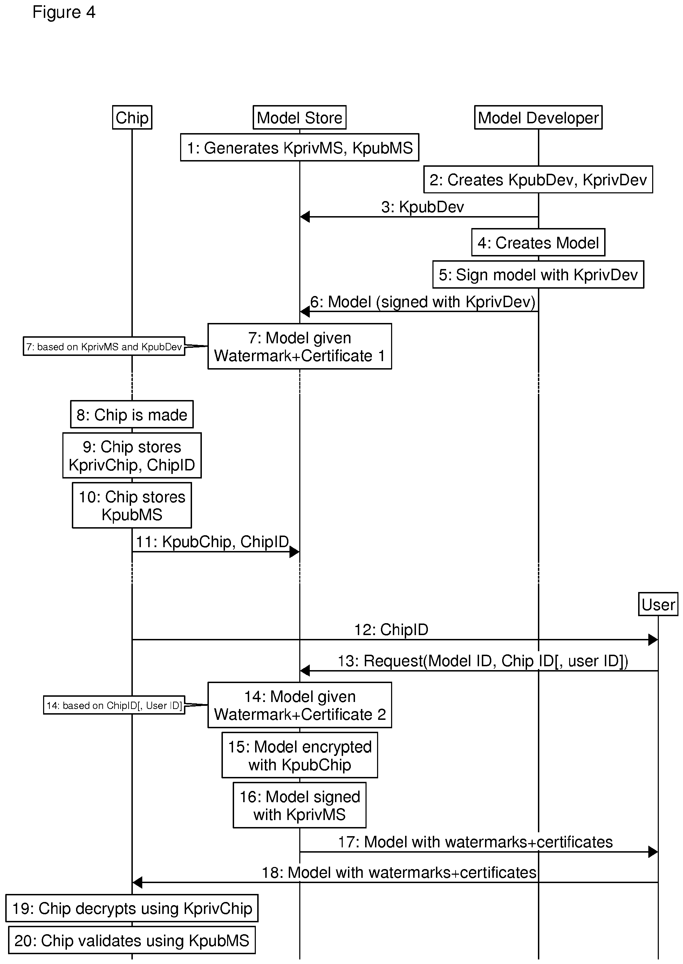

Secure boot and/or secure ID mechanisms may be used together with the certificates to ensure that only a specific target device may use a certain issued model, and to allow a target device to reject models that do not originate with a trusted source. A public/private key (PKI) mechanism may be used to sign, encrypt, decrypt and validate the model between the model developer, the model store, the target device and the user. Figure 4 shows a process flow that may implement this using public ("Kpub") and private ("Kpriv") keys. The steps in figure 4 are numbered from 1 to 20.

At step 1, the model store ("MS") generates its private and public keys KprivMS and KpubMS respectively. In figure 4 the model store is shown as a single entity, but it may in practice be distributed between multiple physical entities. At step 2, a model developer ("Dev") creates its private and public keys KprivDev and KpubDev respectively. At step 3, the developer's public key KpubDev is sent to the model store. At step 4, the model developer creates a model. The model is signed with private key KprivDev at step 5. This allows a device with knowledge of KpubDev, which may be published by the developer, to authenticate the model to the developer. The signing, authentication, encryption and decryption steps described herein may be performed using conventional PKI algorithms. At step 6, the model is sent from the developer to the model store. At step 7, the model is given a watermark and certificate as described above. The set of locations at which the watermark is embedded in the model is based on KprivMS and KpubDev. The contents of the watermark and certificate is static or determined algorithmically.

At step 8, an integrated circuit chip ("Chip") for use in a target device is made. In figure 4 the chip is shown as a single entity, but its functions may be distributed between multiple elements at the target device. The chip stores the its own private key (KprivChip) and its own unique identity (Chip ID) at step 9. The public key of the chip (KpubChip) may be stored in the chip or may be made available by another means, e.g. through a public database. At step 10, the chip is provided with and stores KpubMS. This may be provided to it during manufacture, or it may be received over a network, e.g. when the chip registers to the model store. At step 11, KpubChip (if it is held by the chip) and Chip ID are sent to the model store.

When a user acquires a device comprising the chip and wishes to provision it with a model, at step 12 the ChipID is sent to that user.

Subsequently the user may wish to request that a model is provided to his device. To initiate this, the user sends a request at step 13 to the model store. The request specifies an identity of the model (Model ID), the ChipID of the device to which the model is to be provided, and optionally the user's identity (userID).

At step 14, at the model store, the model is given a second watermark and certificate. The set of locations at which the second watermark is applied is based on the ChipID supplied in step 13 and optionally the user ID. At step 15 the model is encrypted with KpubChip. This ensures that it can only be decrypted by a device having knowledge of KprivChip, which is supposed to be only the target device. At step 16 the model is signed with KprivMS. This allows it to be authenticated to the model store by a device having knowledge of KpubMS, which can be published by the model store and/or provided to the target device in step 10. The model with both watermarks an both certificates is sent to the user at step 17, who sends it to the target device at step 18. The model may be sent directly from the model store to the target device. The chip of the target device then decrypts the model using KprivChip (step 19) and validates the model using KpubMS (step 20). It may also validate the model using KpubDev. If these steps are successful then the target device can then further authenticate the received model using the technique as described above, for example by identifying certificates 1 and/or 2 by and authenticating them. The target device may be configured to implement the model only if the decryption step and all authentication steps are successful.

The target device can therefore accept and validate machine learning models using public / private keys, and store those models including watermarks and certificates in a manner that allows detection of unauthorised or compromised models. The process may allow users of a model to have confidence that the model is from a legitimate source and has not been tampered with.

The target device may have mechanisms that allow some networked capability to validate the integrity, legitimacy and authority of the device itself.

Some non-limiting examples of sensor 2 of the target device 1 include any one or more of a camera, a microphone, a motion sensor, a physical intrusion detection system, a network intrusion detection system, a temperature sensor, a light sensor and a pressure sensor. The sensor may be configured to sense any environmental condition. Some non-limiting examples of traits that may be detected include the following. The appearance of an object (including a person) of a given type in images detected by the camera. The type may be defined by reference to the physical appearance of the object or its behaviour, e.g. a person's gait. Another example of a trait is a profile of detected time-series data that matches a predetermined pattern: e.g. an increase in temperature to a defined value followed by a fall to another value. The trait may be one that, in order to be detected, requires relatively processor-intensive analysis. The trait may be such that it is conveniently detectable by artificial intelligence or heuristics: for example by a trained neural network or other AI model.

## Claims

1. A service provision entity (10) for storing analysis models, the service provision entity comprising:
a data store (13) storing multiple analysis models; and
a network interface whereby the service provision entity can communicate with a target device, the service provision entity being configured to:
receive data defining an analysis model;
identify a set of low significance components of parameters specified in the model;
determine a subset of those low significance components;
apply a watermark to the determined subset of low significance components;
add certificate information to the analysis model, by means of which the analysis model can be authenticated; and
communicate the analysis model to a target device.

2. The service provision entity as claimed in claim 1 wherein the service provision entity is configured to communicate the analysis model to the target device by the steps of
forming a target-specific version of the analysis model by encrypting it with a public key of the target device; and
transmitting the target-specific version of the analysis model to the target device.

3. The service provision entity as claimed in any one of claims 1 to 2, wherein the service provision entity is communicatively coupled to the target device via a network, the target device being a remote target device.

4. The service provision entity as claimed in any one of claims 1 to 3, wherein the service provision entity further comprises a communications terminal and the service provision entity is further configured to:
present to the communications terminal a list of the stored models;
receive from the communications terminal an indication of a selected one of the stored models; and
in response to receiving that indication, transmit the selected model to the target device for implementation by the device.

5. The service provision entity as claimed in any one of claims 1 to 4, wherein the certificate information added to the model is formed in dependence on one or more of:
an identity of the target device,
a certificate associated with the target device,
an identity of a provider of the analysis model,
a certificate associated with the vendor of the analysis model,
an identity of an intermediary distributor of the analysis model, and
a certificate associated with an intermediary distributor of the analysis model.

6. The service provision entity as claimed in any one of claims 1 to 5, wherein the data analysis models are artificial intelligence models whose implementation comprises applying a set of weights to input data.

7. A method for applying a watermark to an analysis model, the method comprising:
receiving (201) data defining a data analysis model;
identifying (202) low significance components of parameters specified in the model;
determining (203) a subset of those low significance components; and
applying (204) the watermark to the determined subset of low significance components.

8. The method as claimed in claim 7, wherein the step of applying the watermark comprises:
identifying in the data defining the model (i) values and (ii) indices pointing to those values;
selecting a subset of those values in dependence on the identity of a provider associated with the model;
exchanging a plurality of pairs of the values of the subset; and
updating the indices pointing to the values of the subset so as to maintain the functionality of the analysis model.

9. The method as claimed in claim 7, comprising:
generating supplemental data containing encoded identification data;
adding the supplemental data to a pre-trained analysis model; and
retraining the model on a sample dataset by a process in which the data from the pre-trained model is allowed to vary but the supplemental data is not allowed to vary.

10. The method as claimed in any of claims 7 to 9, comprising choosing the subset according to a Bloom filter method in dependence on one or more of:
an identity of a target device to which the analysis model is to be provided;
a certificate associated with the target device;
an identity of a vendor of the analysis model;
a certificate associated with the vendor of the analysis model;
an identity of an intermediary distributor of the analysis model; and
a certificate associated with an intermediary distributor of the analysis model.

## Patentansprüche

1. Dienstbereitstellungseinheit (10) zum Speichern von Analysemodellen, wobei die Dienstbereitstellungseinheit umfasst:
einen Datenspeicher (13), der mehrere Analysemodelle speichert; und
eine Netzwerkschnittstelle, wodurch die Dienstbereitstellungseinheit mit einer Zielvorrichtung kommunizieren kann, wobei die Dienstbereitstellungseinheit dazu konfiguriert ist:
Daten zu empfangen, die ein Analysemodell definieren;
einen Satz von Komponenten mit geringer Signifikanz von im Modell bestimmten Parametern zu identifizieren;
eine Teilmenge dieser Komponenten mit niedriger Signifikanz zu bestimmen;
ein Wasserzeichen auf die bestimmte Teilmenge der Komponenten mit niedriger Signifikanz anzuwenden;
dem Analysemodell Zertifikatsinformationen hinzuzufügen, mit deren Hilfe das Analysemodell authentifiziert werden kann; und
das Analysemodell an eine Zielvorrichtung zu kommunizieren.

2. Dienstbereitstellungseinheit nach Anspruch 1, wobei die Dienstbereitstellungseinheit dazu konfiguriert ist, das Analysemodell an die Zielvorrichtung durch die folgenden Schritte zu kommunizieren
Bilden einer zielspezifischen Version des Analysemodells durch Verschlüsselung mit einem öffentlichen Schlüssel der Zielvorrichtung; und
Übertragen der zielspezifischen Version des Analysemodells an die Zielvorrichtung.

3. Dienstbereitstellungseinheit nach einem der Ansprüche 1 bis 2, wobei die Dienstbereitstellungseinheit kommunikativ mit der Zielvorrichtung über ein Netzwerk gekoppelt ist, wobei die Zielvorrichtung eine entfernte Zielvorrichtung ist.

4. Dienstbereitstellungseinheit nach einem der Ansprüche 1 bis 3, wobei die Dienstbereitstellungseinheit ferner ein Kommunikationsendgerät umfasst und die Dienstbereitstellungseinheit ferner dazu konfiguriert ist:
dem Kommunikationsendgerät eine Liste der gespeicherten Modelle zu präsentieren;
von dem Kommunikationsendgerät eine Angabe über ein ausgewähltes der gespeicherten Modelle zu empfangen; und
als Reaktion auf das Empfangen dieser Angabe das ausgewählte Modell an die Zielvorrichtung zur Implementierung durch die Vorrichtung zu übertragen.

5. Dienstbereitstellungseinheit nach einem der Ansprüche 1 bis 4, wobei die dem Modell hinzugefügte Zertifikatsinformation gebildet wird in Abhängigkeit von:
einer Identität der Zielvorrichtung, und/oder
einem der Zielvorrichtung zugeordneten Zertifikat, und/oder
einer Identität eines Bereitstellers des Analysemodells, und/oder
einem dem Verkäufer des Analysemodells zugeordneten Zertifikat, und/oder
einer Identität eines zwischengeschalteten Verteilers des Analysemodells, und/oder
einem dem zwischengeschalteten Verteiler des Analysemodells zugeordneten Zertifikat.

6. Dienstbereitstellungseinheit nach einem der Ansprüche 1 bis 5, wobei die Datenanalysemodelle künstliche Intelligenzmodelle sind, deren Implementierung das Anwenden eines Satzes von Gewichtungen auf Eingabedaten umfasst.

7. Verfahren zum Anwenden eines Wasserzeichens auf einem Analysemodell, wobei das Verfahren umfasst:
Empfangen (201) von Daten, die ein Datenanalysemodell definieren;
Identifizieren (202) von Komponenten mit niedriger Signifikanz von Parametern, die im Modell vorgegeben sind;
Bestimmen (203) einer Teilmenge dieser Komponenten mit niedriger Signifikanz; und
Anwenden (204) des Wasserzeichens auf der bestimmten Teilmenge der Komponenten mit niedriger Signifikanz.

8. Verfahren nach Anspruch 7, wobei der Schritt des Anwendens des Wasserzeichens umfasst:
Identifizieren in den Daten, die das Modell definieren, von (i) Werten und (ii) Indizes, die auf diese Werte hinweisen;
Auswählen einer Teilmenge dieser Werte in Abhängigkeit von der Identität eines dem Modell zugeordneten Bereitstellers;
Austauschen einer Mehrzahl von Paaren der Werte der Teilmenge; und
Aktualisieren der Indizes, die auf die Werte der Teilmenge hinweisen, um die Funktionalität des Analysemodells zu erhalten.

9. Verfahren nach Anspruch 7, umfassend:
Erzeugen zusätzlicher Daten, die codierte Identifikationsdaten enthalten;
Hinzufügen der zusätzlichen Daten zu einem vorab trainierten Analysemodell; und
erneutes Trainieren des Modells auf einem Beispieldatensatz durch einen Prozess, bei dem die Daten des vorab trainierten Modells variieren dürfen, aber die zusätzlichen Daten nicht variieren dürfen.

10. Verfahren nach einem der Ansprüche 7 bis 9, das das Auswählen der Teilmenge nach einem Bloom-Filter-Verfahren umfasst, in Abhängigkeit von:
einer Identität einer Zielvorrichtung, für die das Analysemodell bereitzustellen ist; und/oder
einem der Zielvorrichtung zugeordneten Zertifikat; und/oder
einer Identität eines Verkäufers des Analysemodells, und/oder
einem dem Verkäufer des Analysemodells zugeordneten Zertifikat, und/oder
einer Identität eines zwischengeschalteten Verteilers des Analysemodells; und/oder
einem dem zwischengeschalteten Verteiler des Analysemodells zugeordneten Zertifikat.

## Revendications

1. Entité de fourniture de service (10) pour stocker des modèles d'analyse, l'entité de fourniture de service comprenant :
une mémoire de données (13) stockant plusieurs modèles d'analyse ; et
une interface réseau grâce à laquelle l'entité de fourniture de service peut communiquer avec un dispositif cible, l'entité de fourniture de service étant configurée pour :
recevoir des données définissant un modèle d'analyse ;
identifier un ensemble de composants de faible importance de paramètres spécifiés dans le modèle ;
déterminer un sous-ensemble de ces composants de faible importance ;
appliquer un tatouage numérique au sous-ensemble déterminé de composants de faible importance ;
ajouter des informations de certificat au modèle d'analyse, au moyen desquelles le modèle d'analyse peut être authentifié ; et
communiquer le modèle d'analyse à un dispositif cible.

2. Entité de fourniture de service selon la revendication 1 l'entité de fourniture de service étant configurée pour communiquer le modèle d'analyse au dispositif cible selon les étapes de
formation d'une version spécifique à la cible du modèle d'analyse en le chiffrant avec une clé publique du dispositif cible ; et
transmission de la version spécifique à la cible du modèle d'analyse au dispositif cible.

3. Entité de fourniture de service selon l'une quelconque des revendications 1 à 2, l'entité de fourniture de service étant couplée en communication au dispositif cible par le biais d'un réseau, le dispositif cible étant un dispositif cible distant.

4. Entité de fourniture de service selon l'une quelconque des revendications 1 à 3, l'entité de fourniture de service comprenant en outre un terminal de communications et l'entité de fourniture cible étant en outre configurée pour :
présenter au terminal de communications une liste des modèles stockés ;
recevoir du terminal de communications une indication d'un modèle sélectionné parmi les modèles stockés ; et
en réponse à la réception de cette indication, transmettre le modèle sélectionné au dispositif cible pour une mise en oeuvre par le dispositif.

5. Entité de fourniture de service selon l'une quelconque des revendications 1 à 4, dans laquelle les informations de certificat ajoutées au modèle sont formées de manière dépendante de l'un ou plusieurs de :
une identité du dispositif cible,
un certificat associé au dispositif cible,
une identité d'un fournisseur du modèle d'analyse,
un certificat associé au fournisseur du modèle d'analyse,
une identité d'un distributeur intermédiaire du modèle d'analyse, et
un certificat associé à un distributeur intermédiaire du modèle d'analyse.

6. Entité de fourniture de service selon l'une quelconque des revendications 1 à 5, dans laquelle les modèles d'analyse de données sont des modèles d'intelligence artificielle dont la mise en oeuvre comprend l'application d'un ensemble de pondérations pour entrer des données.

7. Procédé d'application d'un tatouage numérique à un modèle d'analyse, le procédé comprenant :
la réception (201) de données définissant un modèle d'analyse de données ;
l'identification (202) de composants de faible importance de paramètres spécifiés dans le modèle ;
la détermination (203) d'un sous-ensemble de ces composants de faible importance ; et
l'application (204) du tatouage numérique au sous-ensemble déterminé de composants de faible importance.

8. Procédé selon la revendication 7, dans lequel l'étape d'application du tatouage numérique comprend :
l'identification dans les données définissant le modèle (i) de valeurs et (ii) d'indices pointant vers ces valeurs ;
la sélection d'un sous-ensemble de ces valeurs de manière dépendante de l'identité d'un fournisseur associé au modèle ;
l'échange d'une pluralité de paires des valeurs du sous-ensemble ; et
la mise à jour des indices pointant vers les valeurs du sous-ensemble de manière à maintenir le fonctionnement du modèle d'analyse.

9. Procédé selon la revendication 7, comprenant :
la génération de données supplémentaires contenant des données d'identification encodées;
l'ajout des données supplémentaires à un modèle d'analyse préentraîné ; et
le réentraînement du modèle sur un ensemble de données échantillon par un processus dans lequel les données du modèle préentraîné peuvent varier mais les données supplémentaires ne peuvent pas varier.

10. Procédé selon l'une quelconque des revendications 7 à 9, comprenant le choix du sous-ensemble selon une méthode du filtre de Bloom de manière dépendante de l'un ou plusieurs de :
une identité d'un dispositif cible auquel le modèle d'analyse doit être fourni ;
un certificat associé au dispositif cible ;
une identité d'un fournisseur du modèle d'analyse ;
un certificat associé au fournisseur du modèle d'analyse ;
une identité d'un distributeur intermédiaire du modèle d'analyse ; et
un certificat associé à un distributeur intermédiaire du modèle d'analyse.
